# EUROPEAN PATENT APPLICATION

(11) **EP 1 884 532 A1**
(43) Date of publication of application: **06.02.2008**
(21) Application number: 06425550.8
(22) Date of filing: 31.07.2006
(51) Int. Cl.: C08J 3/20, C08J 5/00, C08F 2/44, C08K 9/06

(54) **Process to produce a nanocomposite material and nanocomposite material produced with said process**

(71) Applicant: Italdry S.r.L., 20040 Briosco MI (IT)
(72) Inventor: Di Silvestro, Giuseppe, 20030 Lentate sul Seveso (Milano) (IT); Ortenzi, Marco Aldo, 20123 Milano (IT); Fontanella, Matteo, 20092 Cinisello Balsamo (Milano) (IT)
(74) Representative: Lunati, Vittoriano

(57) **Abstract**

A process to produce a nanocomposite material including a polymer matrix and a plurality of nanocharges (1); the process comprises a surface modification step of the nanocharges (1), which comprises introducing a coupling agent (3) realized by a silane into the nanocharges (1), and a subsequent step to produce the nanocomposite material comprising a polymerization process of the polymer matrix and a process to add the nanocharges (1) into the polymer matrix.

## Description

The present invention relates to a process to produce a nanocomposite material and nanocomposite material produced with said process, of the type specified in the preamble of claim one.

Nanocomposite materials are currently known.

They are substantially realized by polymer matrices charged with particles having at least a dimension in the order of nanometres.

These nanocomposite materials are distinguished in that they have improved mechanical, thermal, optical and chemicophysical properties compared to the polymer matrix, uncharged or charged with particles of conventional micrometric dimensions.

Of the nanocomposite materials, materials composed of polymer matrices and clay lamellae are known in particular.

In fact, clays, in particular although not only montmorillonite, have a specific crystalline form. They are formed of a plurality of layers or lamellae a few nanometres in height. These layers or lamellae are naturally aggregated together by the electrical interaction of ions, for instance sodium ions (Na⁺), present between the lamellae. Therefore, they are not joined solidly to one another.

It is thus possible to introduce polymer chains into the clay layers or aggregates, which move them reciprocally away from one another and distribute them inside the polymeric material.

Nonetheless, to facilitate introduction of the polymer chains into the nanolayers it is preferable to modify the nature of the clay. In particular, it is necessary to introduce "bulky" ions between the layers, which partially move said layers away from each other and modify their nature, transforming them from hydrophilic to substantially lipophilic and therefore more chemically compatible with the polymer chains.

The clays are modified by replacing the ions present in nature with ions of larger dimensions: for instance, with one ammonium ion linked to one or more hydrocarbon chains of various lengths. They interpose between the lamellae improving compatibility between clay and polymer matrix and encouraging the layers to move away from one another or exfoliate.

Specifically, it is said that ions intercalate into the clay, that is, they interact with the surfaces of the nanolayers of which the clay is formed.

Subsequent to intercalation of the bulky ions it is therefore possible to introduce monomers and polymers into they layers of clay.

The aforesaid prior art has some noteworthy drawbacks.

In fact, interaction between nanocharges and polymers is poor, notwithstanding intercalation of the bulky and coupling ions.

Therefore, it is desirable to increase the interaction between nanocharges and polymers, so that the nanocharges bond to a greater extent with the polymer material improving the physicomechanical properties thereof.

In this situation, the technical aim underlying the present invention is to devise a process to produce a nanocomposite material capable of substantially overcoming the aforesaid drawbacks.

Within the scope of said technical aim, an important object of the invention is to implement a process to produce a nanocomposite material with high compatibility between nanocharge and polymer matrix.

The technical aim and objects specified are attained by a process to produce a nanocomposite material as claimed in the appended Claim 1.

Preferred embodiments are highlighted in the dependent claims.

Further features and advantages of the invention are better explained below in the detailed description of a preferred embodiment of the invention, with reference to the attached drawings, wherein:
**Figure 1a** shows a first step of the process according to the invention;
**Figure 1b** schematizes a second step of the process according to the invention;
**Figure 1c** represents a third step of the process according to the invention;
**Figure 1d** shows a fourth step of the process according to the invention; and
**Figure 2** shows a graph illustrating the rheological curves of a nanocomposite polymer produced through the process according to the invention and of a nanocomposite polymer produced through the process according to prior art.

The process according to the invention involves various steps to produce a nanocomposite polymer material comprising a polymer matrix and a plurality of nanocharges **1.** Throughout the present text the nanocharges 1 will be named and numbered differently according to the transformation steps they have undergone.

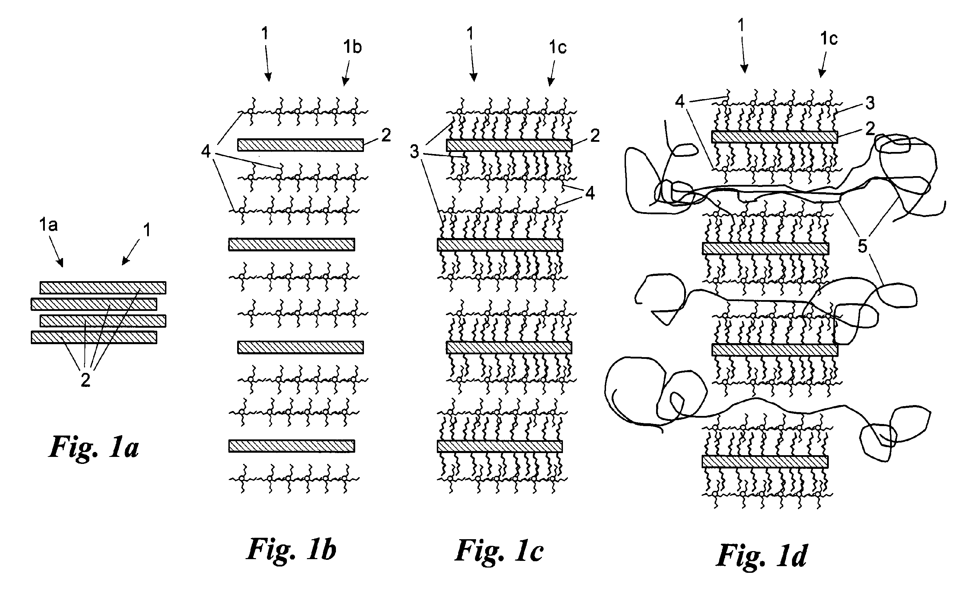

The process involves a step to intercalate a coupling ion **4** (Figure 1b) into a mineral nanocharge **1a.** The coupling ion 4 is desirably a "bulky" ion, preferably realized by an ammonium ion or by a sodium ion.

Said step is known per se and described previously.

The nanocharge 1a involved in the process has a lamellar structure, is desirably made of clay, preferably montmorillonite.

As specified in prior art, clay is formed of planar nanolayers **2** with polytetrahedral structure having a height of about 1 nm.

The intercalation step involves introducing a coupling ion 4 between the layers 2 of the mineral nanocharges 1 a. Said coupling ion 4 bonds to the layers 2 by means of an ion interaction.

The intercalation step makes it possible to obtain a mineral nanocharge 1a realized by layers 2 at a greater distance from one another and with a substantially lipophilic nature.

The mineral nanocharges 1a subjected to the intercalation step are called here, for simplicity, intercalated nanocharges **1b.**

Intercalated nanocharges 1b are available on the market with the trade names Cloisite®.

The process according to the invention also comprises a surface modification step of the mineral nanocharges 1a or of the intercalated nanocharges 1 b (Figure 1 c).

Said surface modification step is preferably implemented subsequent to the intercalation step.

The surface modification step involves the use of a coupling agent 3 that bonds chemically to the surface of the clay nanolayer 2.

It is preferably realized by a silane.

The term silane indicates a molecule with the generic formula:

Y - R - Si - X_{1,2,3}

where the groups X bond to the clay nanolayers, while the group Y bonds to the polymer matrix. In particular, the group Y is selected as a function of the polymer matrix. It can, for example, be realized by a NH₂ group.

Silanes can be of various nature, in particular they can be realized by: γ-trimethoxypropylaminosilane, γ- triethoxypropylaminosilane, N-(β-aminoethyl)-γ-aminopropyltrimethoxysilane or yet others.

To produce surface modification, the coupling agent 3 and the intercalated nanocharges 1b are dispersed in a liquid that forms the reaction environment. Said liquid is preferably realized by an organic solvent, preferably a chlorinated solvent, in particular by methylene chloride.

In particular, the coupling agent 3 and the intercalated nanoclays 1b are dispersed in an organic solvent with percentages in weight ranging respectively from 0.01% to 0.2% and from 0.5% to 5% with respect to the weight of the solvent.

The organic solvent allows dispersion of the intercalated nanocharges 1b which, as specified, have a substantially lipophilic nature. Dispersion would however not be guaranteed by an aqueous solution, due to the lipophilic nature of the intercalated nanocharges 1b.

To conclude the surface modification step the coupling agent 3 and the intercalated nanocharges 1b must react reciprocally.

For this purpose, the solvent containing the coupling agent 3 and the intercalated nanocharges 1 b are kept in an inert atmosphere, preferably realized by nitrogen (N₂).

By means of said technical solution, the coupling agent 3 does not interact with the water molecules present as atmospheric humidity and its ether groups do not self-condense by hydrolysis.

The solvent containing the coupling agent 3 and the nanocharges 1b is thus made to evaporate.

Evaporation takes place in a first stage at ambient temperature and in a second stage at controlled temperature.

In particular, the controlled temperature ranges from 80°C to 150°C, preferably from 100°C to 140°C for a period ranging from 0.5 to 4 hours.

In these conditions, the coupling agent 3 bonds to the intercalated nanocharges 1b, in particular to the surface of the layers 2 which form the intercalated nanocharges 1b. Specifically, the coupling agent 3 bonds with covalent atomic bonds to the layers 2, in particular the covalent bonds are formed with hydroxyl groups (OH⁻) present on the surface of the layers 2.

Alternatively, the described surface modification step can be implemented on the unintercalated mineral nanocharges 1 a.

The mineral 1 a or intercalated 1b nanocharges with which the coupling agent 3 is bonded are called here, for simplicity, modified nanocharges **1c.**

Subsequent to the surface modification step, a step to produce the nanocomposite material is implemented (Figure 1d), through which the nanocomposite material realized by a polymer matrix reinforced with modified nanocharges 1c is obtained.

Said step comprises the processes to polymerize the polymer matrix and to add the modified nanocharges 1 c.

As is known, during the polymerization processes several monomers or polymers combine and develop into a series of polymer chains 5, which will then form the polymer matrix.

In the specific case of the invention, the polymerization process comprises condensation polymerization to obtain a polyamide, more specifically a "polyamide 6".

The addition process involves introducing the modified nanocharges 1 c into the polymer matrix.

Said addition process can be implemented simultaneously to the polymerization process. In this case, the modified nanocharges 1c are added "in situ" to the polymer matrix being formed. In particular, modified nanocharges 1 c are added, in percentages in weight ranging from 0.5% to 10%, preferably from 2% to 7.5%, with respect to the weight of said polymer matrix.

In the case described, the polymer chains 5 can bond to the modified nanocharges 1 c and develop exfoliating the layers 2.

In particular it seems possible for the polymer chains 5 to connect, by means of a covalent bond, directly to the Y radical of the silanes, as described above. In this case, the polymer chains 5 which form the polymer matrix originate directly on the surface of the nanolayers 2. Said solution seems to occur in particular when the polymer matrix is realized by a polyamide and the Y radical of an NH₂ group.

Alternatively, the addition process can be implemented subsequent to the polymerization process. In this case, the modified nanocharges 1 care added to the previously formed polymer matrix. In particular, the modified nanocharges 1c can be added during processing of the polymer matrix, for example, although not only, during extrusion thereof.

In this latter case, the modified nanocharges 1 c are added in percentages of weight ranging from 0.5% to 15%, preferably from 0.5% to 10%, with respect to the weight of the polymer.

The invention comprises a nanocomposite polymer material produced with the process described.

In particular, the polymer according to the invention is a "polyamide 6" reinforced with a modified nanocharge 1 c in percentages in weight ranging from 0.5% to 15%, preferably from 0.5% to 10%, in weight.

The invention also teaches a new use of silanes for surface modification of the layers 2 of clay nanocharges 1 according to the previously expounded processes.

The invention achieves important advantages.

In fact, the coupling agent 3, realized by silane, allows optimal compatibility between nanocharges 1 c and polymer chains 5.

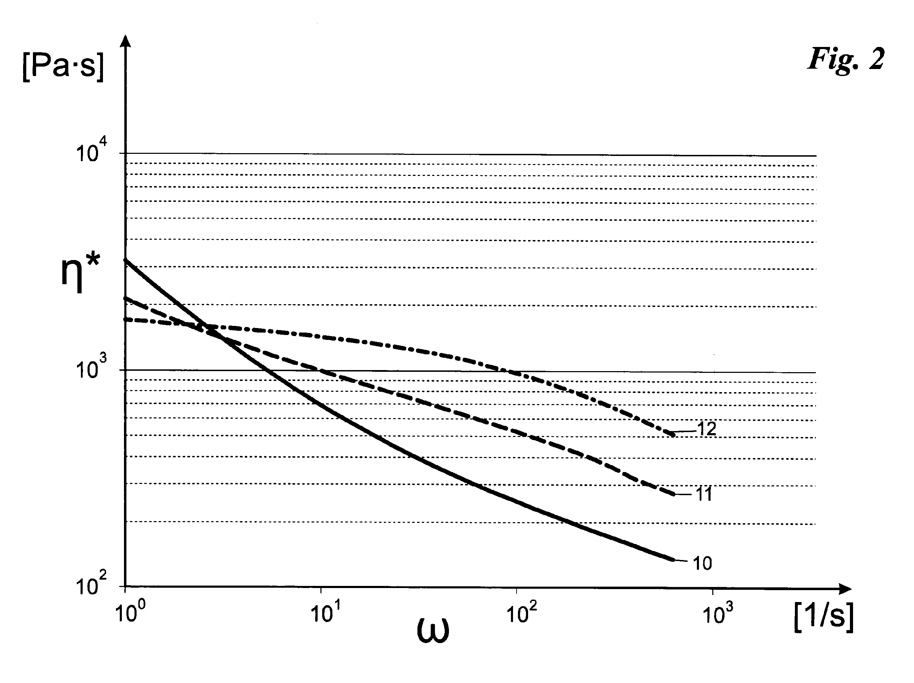

In particular, Figure 2 shows a graph indicating the curves of rheological behaviour of an uncharged polymer, in a dash-dot line **12,** a conventional nanocomposite polymer, in a dashed line **11,** and of a nanocomposite polymer according to the invention, in a continuous line **10.**

These graphs indicate the total viscosity of the polymer (η*) [Pa.s], in the ordinates, as a function of the angular frequency (w) [1/s] of the shear deformation. The scales are logarithmic.

The polymer according to the invention is a "polyamide 6" reinforced with a modified nanocharge 1c in percentage in weight equal to 5%. The material according to prior art is instead composed of an identical nanocomposite polymer, containing the same quantity of charge and produced according to prior art processes. Finally, the uncharged polymer is the same "polyamide 6" devoid of charge.

It can be observed that the material according to the invention maintains, at high frequencies, a considerably lower viscosity with respect to conventional materials.

In particular, at deformation frequencies of around 100 deformations per second, the viscosity of a polymer according to the invention is less than half the viscosity of a nanocomposite polymer according to prior art, and less than one quarter of the viscosity of an uncharged polymer.

Said lower viscosity translates into a lower working load during processing of the material and therefore into a lower transformation cost of the finished product.

## Claims

1. Process to produce a nanocomposite material including a polymer matrix and a plurality of nanocharges (1), comprising:
a surface modification step of said nanocharges (1), comprising introducing a coupling agent (3) into said nanocharges (1),
and a subsequent step to produce the nanocomposite material comprising a polymerization process of said polymer matrix and a process to add said nanocharges (1) to said polymer matrix,
- **characterized in that** a silane is used as coupling agent (3).

2. Process according to claim 1, wherein said surface modification step is produced by dispersion of said coupling agent (3) and of said nanocharges (1) in an organic solvent.

3. Process according to claim 2, wherein said organic solvent is a chlorinated solvent.

4. Process according to claims 2 or 3, wherein said coupling agent (3) and said nanocharges (1) are dispersed in said organic solvent in percentages in weight ranging respectively from 0.01% to 0.2% and from 0.5% to 5% with respect to the weight of said solvent.

5. Process according to claims 2, 3 or 4, wherein said organic solvent comprising said coupling agent (3) and said nanocharges (1) is placed in an inert environment.

6. Process according to claims 2 - 5, wherein the surface modification step involves evaporation of said organic solvent containing said coupling agent (3) and said nanocharges (1).

7. Process according to claim 6, wherein said evaporation is obtained through a final evaporation stage at controlled temperature and ranging from 80°C to 150°C, for a period ranging from 0.5 to 4 hours.

8. Process according to claims 2 - 7, wherein said nanocharges (1) are intercalated nanocharges (1 b) by means of a coupling ion (4).

9. Process according to claims 1 - 8, wherein said addition process is implemented simultaneously to said polymerization process, and said nanocharges (1) are added "in situ" to said polymer matrix being formed.

10. Process according to claims 1 - 8, wherein said addition process is implemented subsequent to said polymerization process.

11. Nanocomposite material **characterized in that** it is produced through the process according to the previous claims.

12. Material according to claim 11, wherein said nanocharges are present in percentages in weight ranging from 0.5% to 15%, with respect to said polymer material.

13. Use of silanes to modify the surface of clay nanocharges (1).

14. Use according to claim 12, wherein said nanocharges (1) are intercalated nanocharges (1 b) by means of a coupling ion (4).
